# EUROPEAN PATENT APPLICATION

(11) **EP 4 664 330 A1**
(43) Date of publication of application: **17.12.2025**
(21) Application number: 24182144.6
(22) Date of filing: 14.06.2024
(51) Int. Cl.: G06F 21/44, G06F 21/53, G06F 21/57, H04L 9/40, G06F 21/51

(54) **SYSTEM AND METHOD FOR SECURE EXECUTION OF APPLICATIONS ON AN EDGE PLATFORM**

(71) Applicant: Siemens Aktiengesellschaft, 80333 München (DE)
(72) Inventor: Dixit, Vikas, 560105 Bandenalsandra Jigani (IN); Reiter, Andreas, 8401 Kalsdorf bei Graz (AT)
(74) Representative: Isarpatent

(57) **Abstract**

A method (500) of enabling secure execution of one or more applications (220) on an edge platform (110) is described. The method comprises receiving (502), from the one or more applications configured to run within an isolated runtime environment (210) at the edge platform (110), an indicator indicative of a trust state of the one or more applications (220). Further, the method comprises sending (504) the received indicator to an attestation service entity (130) for verifying the indicator. Further, the method comprises receiving (506) a verification response from the attestation service entity (130), the verification response indicating that the one or more applications (220) are running in the trusted state within a trusted environment. Further, the method comprises, upon receiving the verification response from the attestation service entity (130), providing (508) the one or more applications with data for execution of the one or more applications (220).

## Description

The present invention generally relates to edge computing, and more particularly relates to a system and a method for enabling secure execution of applications at an edge platform.

The expansion of the Internet of Things (IoT) has led to a significant increase in the volume of production data, offering valuable insights from machine data and process data. Industrial Edge encompasses various components such as Edge devices, applications, connectivity, and management infrastructure, revolutionizing edge computing within industrial settings. This approach allows data to be processed at its source, resulting in improved workflows, resource utilization, and product quality. Moreover, it enables seamless integration with cloud computing for enhanced computing power, storage, and remote access, while ensuring that data control remains with the user.

However, industrial environments often deal with sensitive data from controllers and sensors, necessitating robust security measures. Installing applications from different vendors on Industrial Edge systems may require highly privileged access, potentially exposing sensitive data to unauthorized users or compromised software. Additionally, industrial edge devices gather significant volumes of sensitive data, including usage data for insurance purposes, raising security concerns during data processing.

Although existing solutions ensure data encryption and security during storage and transmission, protecting data during processing, or while in use, remains a challenge. As per current technologies, full disk encryption may be employed for protection of stored data. Further, communication security mechanisms, such as Transport Layer Security (TLS) mechanisms may be utilized for protection of data in transmission. However, safeguarding data in use within the Industrial Edge platform remains an unaddressed issue.

In summary, while data protection is ensured during transmission and storage, protecting data during processing is a critical aspect in the Industrial Edge environment. Currently, there is a lack of solutions addressing specific security requirements related to data in use or processing.

Further, vendors that provide applications for execution need to trust all components within the Industrial Edge ecosystem. Particularly, when high-privilege users have root access to the platform, the code/binary of the applications can be compromised. Accordingly, in addition to sensitive data, there is also a requirement for the protection of application code. The protection has to be against software attacks on different levels (for instance, attacks on operating system, Basic Input/Output System (BIOS), and hypervisor), protocol attacks (for example, attacks on protocols and workload), physical attacks (for example, bus monitoring, cache monitoring, plugging of attack devices, in-scope Dynamic Random Access Memory (DRAM) extraction), and supply-chain attacks (for instance, adding debugging ports).

Accordingly, there is a need for a system and a method to overcome the above-identified issues.

According to one embodiment of the present invention, a method of enabling the secure execution of one or more applications on an edge platform is described. The method comprises receiving, from one or more applications, an indicator indicative of a trust state of the one or more applications. The one or more applications are configured to run within an isolated runtime environment at the edge platform. Further, the method comprises sending the received indicator to an attestation service entity for verifying the indicator indicating the trust state of the one or more applications. Further, the method comprises receiving a verification response from the attestation service entity, the verification response indicating that the one or more applications are running in the trusted state within a trusted environment. Further, the method comprises, upon receiving the verification response from the attestation service entity, providing the one or more applications with data for execution of the one or more applications, thereby enabling data integrity and confidentiality within the edge platform.

In an embodiment, providing the one or more applications with data for the execution of the one or more applications comprises receiving the data for execution of the one or more applications from one or more devices associated with the edge platform. Further, the method comprises encrypting the data using one or more encryption keys. Further, the method comprises providing the data to the one or more applications running within the isolated runtime environment for execution of the one or more applications. The one or more applications running within the isolated runtime environment include one or more decryption keys corresponding to the one or more encryption keys.

In an embodiment, the data from one or more devices include one or more data from a plurality of sensors associated with the edge platform and data from a plurality of Internet of Things (IoT) devices associated with the edge platform.

In an embodiment, the method further comprises receiving, from a loader application, an indicator indicating the trust state of the loader application. The loader application is associated with encrypted versions of the one or more applications. Further, the method comprises sending the received indicator to the attestation service entity for verifying the indicator indicating the trust state of the loader application. Further, the method comprises receiving a verification response from the attestation service entity, the verification response indicating that the loader application is running in the trusted state within a trusted environment. Further, the method comprises, upon receiving the verification response from the attestation service entity, decrypting the encrypted versions of the one or more applications for loading the one or more applications within the isolated runtime environment, thereby enabling application code integrity and confidentiality within the edge platform.

In an embodiment, the attestation service entity is provided as a remote service for the edge platform.

In an embodiment, the one or more applications include a first application and at least a second application, wherein the first application and the at least second application are associated with corresponding isolated runtime environments within the edge platform.

According to another embodiment of the present invention, a system to enable the secure execution of one or more applications on an edge platform is described. The system comprises a memory and one or more processors communicatively coupled to the memory. The memory comprises programmable instructions which, when executed by the one or more processors, cause the one or more processors to receive, from the one or more applications, an indicator indicative of a trust state of the one or more applications, wherein the one or more applications are configured to run within an isolated runtime environment at the edge platform. Further, the one or more processors are configured to send the received indicator to an attestation service entity for verifying the indicator indicating the trust state of the one or more applications. Further, the one or more processors are configured to receive a verification response from the attestation service entity, the verification response indicating that the one or more applications are running in the trusted state within a trusted environment. Further, the one or more processors are configured to provide the one or more applications with data for execution of the one or more applications upon receiving the verification response from the attestation service entity, thereby enabling data integrity and confidentiality within the edge platform.

In an embodiment, to provide the one or more applications with data for execution of the one or more applications, the one or more processors are configured to receive the data for execution of the one or more applications from one or more devices associated with the edge platform. Further, the one or more processors are configured to encrypt the data using one or more encryption keys. Further, the one or more processors are configured to provide the data to the one or more applications running within the isolated runtime environment for execution of the one or more applications. The one or more applications running within the isolated runtime environment include one or more decryption keys corresponding to the one or more encryption keys.

In an embodiment, the data from one or more devices include one or more of data from a plurality of sensors associated with the edge platform and data from a plurality of Internet of Things (IoT) devices associated with the edge platform.

In an embodiment, the one or more processors are further configured to receive, from a loader application, an indicator indicating the trust state of the loader application. The loader application is associated with encrypted versions of the one or more applications. Further, the one or more processors are configured to send the received indicator to the attestation service entity for verifying the indicator indicating the trust state of the loader application. Further, the one or more processors are configured to receive a verification response from the attestation service entity, the verification response indicating that the loader application is running in the trusted state within a trusted environment. Further, the one or more processors are configured to decrypt the encrypted versions of the one or more applications for loading the one or more applications within the isolated runtime environment upon receiving the verification response from the attestation service entity, thereby enabling application code integrity and confidentiality within the edge platform.

In an embodiment, the attestation service entity is provided as a remote service for the edge platform.

In an embodiment, the one or more applications include a first application and at least a second application, wherein the first application and the at least second application are associated with corresponding isolated runtime environments within the edge platform.

According to another embodiment of the present invention, an environment is disclosed. The environment includes a system, as discussed throughout the present invention, an edge platform communicatively coupled to the system, and an attestation service entity communicatively coupled to the system via a network. The system is configured to perform one or more methods, as discussed throughout the present invention.

According to another embodiment of the present invention, a computer-program product is disclosed. The computer-program product has machine-readable instructions stored therein, that when executed by one or more processors, cause the one or more processors to perform one or more methods, as discussed throughout the present invention.

According to another embodiment of the present invention, a non-transitory computer-readable medium is disclosed. The non-transitory computer-readable medium is encoded with executable instructions, that when executed by one or more processors, cause the one or more processors to perform one or more methods, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail in the accompanying drawings.

These and other features, aspects, and advantages of the present invention will become better understood when the following detailed description is read with reference to the accompanying drawings in which like characters represent like parts throughout the drawings, wherein:
**FIG. 1** illustrates an environment comprising an edge platform and a system configured to enable data integrity, data confidentiality, code integrity, and code confidentiality within the edge platform, according to an embodiment of the present invention;
**FIG. 2** illustrates a detailed block diagram of the environment, according to an embodiment of the present invention;

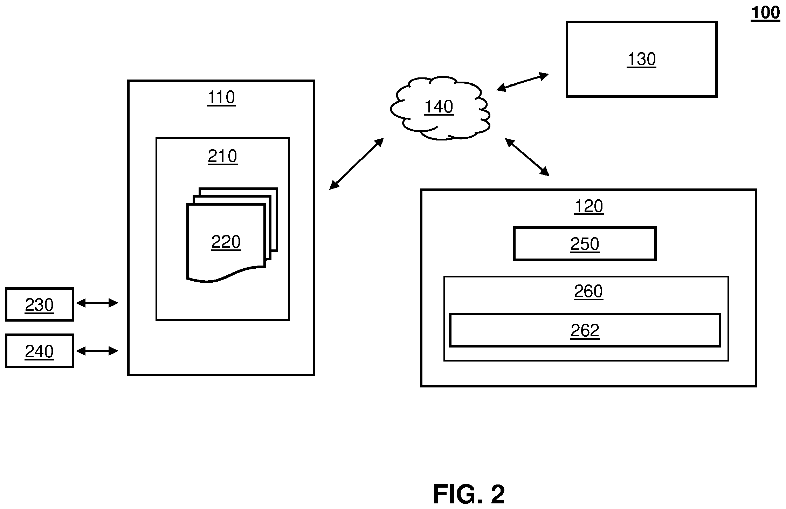

**FIG. 2** illustrates a sequence flow for managing the computing resources by the system, according to an embodiment of the present invention;

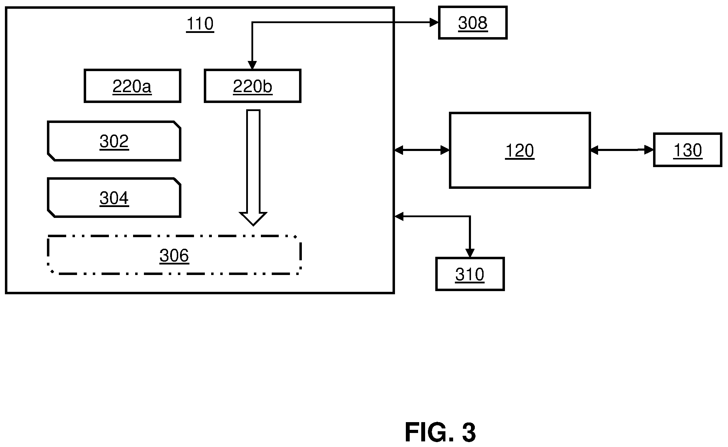

**FIG. 3** illustrates an exemplary configuration of the edge platform for data and code protection, according to an embodiment of the present invention;

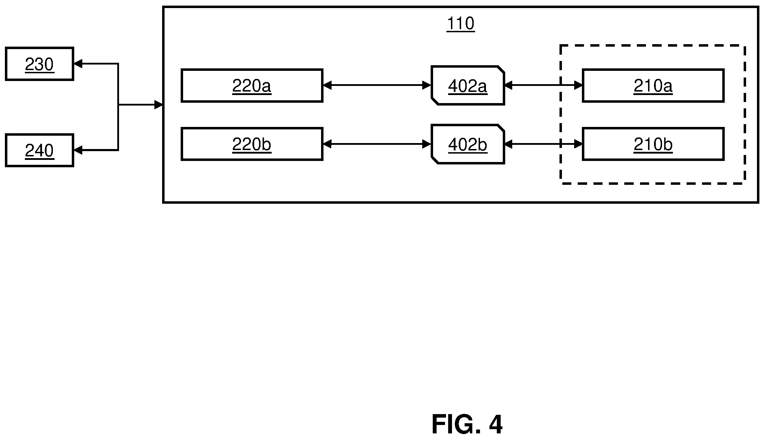

**FIG. 4** illustrates an exemplary use case for secure execution of application on the edge platform to enable data and code protection, according to an embodiment of the present invention;

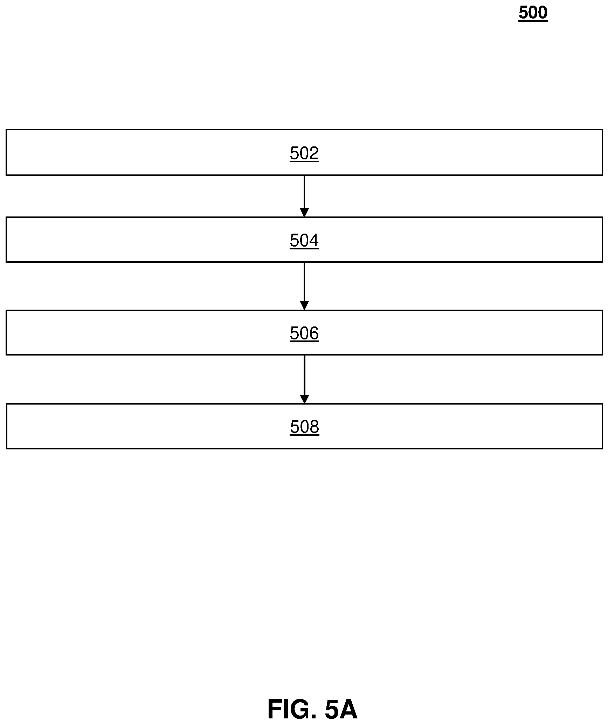

**FIGS. 5A-5B** illustrate exemplary process flows depicting a method for enabling the secure execution of one or more applications on the edge platform by the system, according to an embodiment of the present invention;

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

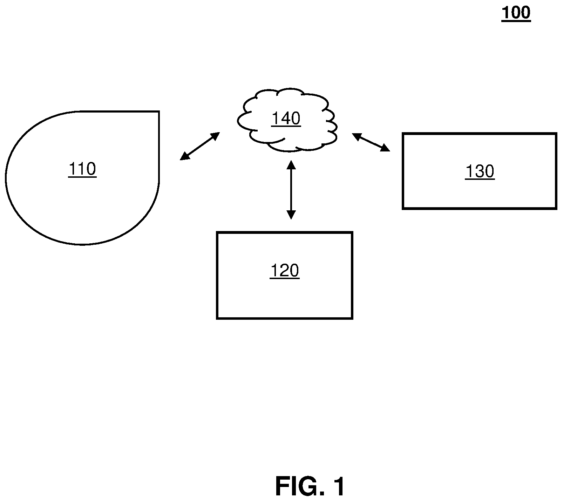

**FIG.** 1 illustrates an overview of an environment 100 comprising an edge platform 110 and a system 120 configured to enable data integrity, data confidentiality, code integrity, and code confidentiality within the edge platform 110. The edge platform is implemented as an edge node within the environment 100. In an embodiment, the edge platform is an industrial edge platform.

The environment 100 further comprises an attestation service entity 130. The system 120 is communicatively coupled to the attestation service entity 130 via a network 140. The system 120 is also communicatively coupled to the edge platform 110 via the network 140.

The network 140 includes a wireless network or a wired network. For example, the network 140 corresponds to a wireless communication network that allows communication between the system 120, the edge platform 110, and the attestation service entity 130 via the internet.

It is appreciated that although a single edge platform 110 is depicted in FIG. 1, the environment 100 can include additional edge platforms. The details provided in the present disclosure for the edge platform 110 are equally applicable to the additional edge platforms.

The edge platform 110 corresponds to a node associated with an organization, a company, or one or more individuals. In an embodiment, the edge platform 110 is implemented via an electronic device. In an embodiment, the edge platform 110 is implemented via a cloud-based server.

In an embodiment, the attestation service entity 130 is remote to the edge platform 110. In an embodiment, the attestation service entity 130 is provided as a remote service for the edge platform 110.

In an embodiment, the system 120 is a cloud-based system, such as a cloud server. In such an embodiment, the functionality of the system 120 is provided by the cloud server, and the details provided with respect to the system 120 would be applicable for the cloud server. In another embodiment, the system 120 is hosted on one or more electronic devices, such as, but not limited to, a laptop computer, a desktop computer, a smartphone, and the like. In an embodiment, the system 120 is hosted on the edge platform 110. In an embodiment, the system 120 is provided in a distributed manner, in that, one or more components and/or functionalities of the system 120 are provided through an electronic device, a cloud unit, or the edge platform 110.

**FIG. 2** illustrates a detailed block diagram of the environment 100.

The edge platform 110 includes one or more isolated runtime environments 210. In an embodiment, the one or more isolated runtime environments 210 refer to isolated memory regions within the edge platform 110. The edge platform 110 further includes one or more applications 220. In a non-limiting embodiment, the one or more applications 220 includes application 1, application 2, ...application N. The one or more applications 220 thus include a first application (say, application 1) and at least a second application (say, application 2, ...application N).

In an embodiment, each of the one or more applications 220 is associated with corresponding isolated runtime environments 210. For instance, the first application amongst the one or more applications 220 includes a first isolated runtime environment and the second application includes a second isolated runtime environment. In other words, the isolated runtime environment 210 includes separate environments, for instance memory regions, corresponding to each of the one or more applications 220.

The edge platform 110 is further associated with a plurality of devices. The plurality of devices includes a plurality of sensors 230 and a plurality of Internet of Things (IoT) devices 240. In an embodiment, the plurality of sensors 230 and the plurality of loT devices 240 form a part of the environment 100 as depicted in FIG. 1. In an embodiment, the plurality of devices provide data to the one or more applications 220. The data from the plurality of devices includes data from the plurality of sensors 230 and data from the plurality of loT devices 240.

The system 120 is configured to enable the secure execution of the one or more applications 220 on the edge platform 110. The system 120 is configured to ensure data integrity, data confidentiality, code integrity, and code confidentiality for the one or more applications 220.

The system 120 includes one or more processors 250 and a memory 260. As a non-limiting example, the one or more processors 250 are a single processing unit or a set of units each including multiple computing units. The one or more processors 250 are implemented as one or more microprocessors, microcomputers, microcontrollers, digital signal processors, central processing units, state machines, logic circuitries, and/or any devices that manipulate signals based on operational instructions (computer-readable instructions) stored in the memory 260. Among other capabilities, the one or more processors 250 are configured to fetch and execute computer-readable instructions and data stored in the memory 260. The one or more processors 250 include one or a plurality of processors. The plurality of processors are further implemented as a general-purpose processor, such as a central processing unit (CPU), an application processor (AP), or the like, a graphics-only processing unit, such as a graphics processing unit (GPU), a visual processing unit (VPU), and/or an Al-dedicated processor such as a neural processing unit (NPU). The plurality of processors control the processing of the input data in accordance with a predefined operating rule or an artificial intelligence (Al) model stored in the memory 260. The predefined operating rule or the AI model is provided through training or learning.

The one or more processors 250 are disposed in communication with one or more input/output (I/O) devices via an Input/Output (I/O) interface. The I/O interface employs communication code-division multiple access (CDMA), highspeed packet access (HSPA+), global system for mobile communications (GSM), long-term evolution (LTE), WiMax, or the like, etc. In another embodiment of the present invention, the I/O interface employs ethernet, industrial wireless Local Area Network (LAN), Process Field Bus (PROFIBUS), Actuator Sensor (AS) Interface, and the like.

In some embodiments, the memory 260 is communicatively coupled to the one or more processors 250. The memory 260 is configured to store instructions executable by the one or more processors 250. In one embodiment, the memory 260 communicates via a bus within the system 120. The memory 260 includes, but is not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media and the like. In one example, the memory includes a cache or random-access memory (RAM) for the one or more processors 250.

In alternative examples, the memory 260 is separate from the one or more processors 250 such as a cache memory of a processor, the system memory, or other memory. The memory 260 is an external storage device or a database for storing data. The memory 260 is operable to store instructions executable by the one or more processors 250. The functions, acts, or tasks illustrated in the figures or described are performed by the programmed processor for executing the instructions stored in the memory 260. The functions, acts, or tasks are independent of the particular type of instruction set, storage media, processor or processing strategy and may be performed by software, hardware, integrated circuits, firmware, micro-code, and the like, operating alone or in combination. Likewise, processing strategies include multiprocessing, multitasking, parallel processing, and the like.

The memory 260 includes a database 262 to store data. Further, the memory 260 includes an operating system for performing one or more tasks of the system 120, as performed by a generic operating system. In one embodiment, the database 262 is configured to store the information as required by the one or more processors 250 to perform one or more functions for enabling the secure execution of the one or more applications 220 on the edge platform 110.

In a non-limiting example, the database 262 is provided through the cloud storage and the one or more processors 250 are integrated with an electronic device.

Further, the present invention also contemplates a computer-program product that includes instructions or receives and executes instructions responsive to a propagated signal. Further, the instructions are transmitted or received over the network 140 via a communication port or interface or using a bus (not shown). The communication port or interface may be a part of the one or more processors 250 or may be a separate component. The communication port may be created in software or may be a physical connection in hardware. The communication port may be configured to connect with the network 140, external media, the display, or any other components in the system 120. The connection with the network 140 may be a physical connection, such as a wired ethernet connection, or may be established wirelessly. Likewise, the additional connections with other components of the system 120 may be physical or may be established wirelessly. The network 140 may alternatively be directly connected to the bus. For the sake of brevity, the architecture, and standard operations of the memory 260 and the one or more processors 250 are not discussed in detail.

In an embodiment, the computer-program product, having machine-readable instructions stored therein, when executed by one or more processors 250, causes the one or more processors 250 to perform a method of managing computing resources for a workload. The details on the method(s) performed by the one or more processors 250 have been elaborated in subsequent paragraphs at least with reference to FIGS. 5A-5B.

Further, the present invention also contemplates a non-transitory computer-readable medium encoded with executable instructions. The executable instructions, when executed by one or more processors 250, cause the one or more processors 250 to perform a method of managing computing resources for a workload. The details on the method(s) performed by the one or more processors 250 have been elaborated in subsequent paragraphs at least with reference to FIGS. 5A-5B. Examples of computer-readable mediums include nonvolatile, hard-coded type mediums such as read-only memories (ROMs) or erasable, electrically programmable read-only memories (EEPROMs), and user-recordable type mediums such as floppy disks, hard disk drives and compact disk read-only memories (CD-ROMs) or digital versatile disks (DVDs).

Referring collectively to FIGS. 1-2, the one or more processors 250 are configured to receive an indicator from the one or more applications 220. The indicator is indicative of a trust state of the one or more applications 220. The trust state is used to determine whether the one or more applications 220 are running in a trusted state in a trusted environment. In an embodiment, the trusted environment is referred to as a Trusted Execution Environment (TEE).

In an embodiment, the one or more applications 220 process sensitive customer data. Further, the one or more applications 220 are coded by a vendor. The one or more applications 220 are thus associated with vendor Intellectual Property (IP). In case of edge deployment of the one or more applications 220, it is essential to protect the vendor IP as well as the sensitive customer data.

The one or more processors 250 are configured to send the received indicator to the attestation service entity 130. The attestation service entity 130 is configured to verify an indicator indicating the trust state of the one or more applications 220. The attestation service entity 130 is configured to perform remote attestation and verify the trust state of the one or more applications 220. Based on the verification, the attestation service entity 130 is configured to generate a verification response indicating that the one or more applications 220 are running in the trusted state within a trusted environment.

In an embodiment, the attestation service entity 130 is remote to the edge platform 110. In an embodiment, the attestation service entity 130 is independently operated.

The one or more processors 250 are configured to receive the verification response from the attestation service entity 130. The verification response is in the form of a trustworthy statement indicating that the one or more applications are running in a genuine TEE. Based on the verification response indicating that the one or more applications are running in the trusted state within a trusted environment, it can be inferred that the one or more applications are secure.

Upon receiving the verification response from the attestation service entity 130, the one or more processors 250 are configured to provide data for execution of the one or more applications 220. In an embodiment, the data is received from the plurality of sensors 230 and/or the plurality of loT devices 240. As the one or more applications 220 have proved the presence of the trusted environment, the data can be provided to the one or more applications 220 running in the isolated runtime environment 210.

The one or more processors 250 are further configured to receive the data for execution of the one or more applications 220 from the one or more devices. As described previously, the data from the one or more devices include data from the plurality of sensors 230 and/or data from the plurality of loT devices 240. In a non-limiting example, the data includes metering data, controller data, and sensor data.

The one or more processors 250 are further configured to encrypt the data using one or more encryption keys. The encryption is performed as per a suitable encryption technique. The one or more processors 250 are further configured to provide the data to the one or more applications 220 within the isolated runtime environment for execution of the one or more applications 220. Since the data is encrypted, the one or more applications 220 includes one or more decryption keys corresponding to the one or more encryption keys.

In an embodiment, such as when the one or more applications are running in corresponding isolated runtime environments, the encryption and decryption keys are only known to the corresponding one or more applications. For instance, the first application may have access to the encryption and decryption keys required for data to be executed by the first application, however, the first application is not aware of the encryption and decryption keys of a different, second application.

In an embodiment, the one or more processors 250 are configured to ensure that vendor IP (code integrity and code confidentiality) is secured. Access to the code of the one or more applications is thus prevented. In an embodiment, the code of the one or more applications 220 are loaded onto the edge platform 110 when the attestation service entity 130 assured that the code will be loaded into a trusted environment (TEE).

In an embodiment, the one or more processors 250 are configured to receive an indicator indicating the trust state of a loader application. The loader application is started in the trusted environment (TEE). The loader application is associated with encrypted versions of the one or more applications 220. The received indicator is sent to the attestation service entity 130 for verifying the indicator indicating the trust state of the loader application. The attestation service entity 130 verifies the indicator and generates a verification response.

In an embodiment, the loader application connects with a vendor-provisioning service to share the indicator. The vendor provisioning service then acquires the indicator and obtains the verification response from the attestation service entity 130.

The one or more processors 250 are configured to receive the verification response from the attestation service entity 130. The verification response indicates that the loader application is running in the trusted state within a trusted environment. Upon receiving the verification response from the attestation service entity 130, the encrypted versions of the one or more applications 220 are decrypted for loading the one or more applications 220 within the isolated runtime environment 210, or in corresponding isolated runtime environments 210. Application code integrity and confidentiality within the edge platform 110 is thus enabled as the application code is only available within the trusted environment.

The system 120 enables data integrity, data confidentiality, code integrity, and code confidentiality within the edge platform. Data confidentiality refers to protection against unauthorized entities viewing data while data is in use within the TEE. Data integrity refers to preventing unauthorized entities from altering data when data is being processed by any entity outside the TEE. Code integrity refers to protection against the code in the TEE being replaced or modified by unauthorized entities.

A secure and trustworthy execution of applications is thus achieved at the edge platform. In the present disclosure, by means of the isolated runtime environments, i.e., by using confidential computing, the computing base (Trusted Computing Base (TCB)) for executing the one or more applications is reduced to an absolute minimum, thereby completely removing high-privileged local components from the TCB. Further, as the one or more applications can be executed in corresponding isolated runtime environments, data processed in one runtime environment is not accessible outside said runtime environment. This protects against outside attackers having high-privileged root access, another compromised high-privileged component being executed, and/or compromise of the operating system. Further, the attestation service entity can validate the state (attestation) of the one or more applications, thereby minimizing the risk of communicating with compromised or modified applications. As a result, customer IP protection (data integrity and data confidentiality) as well as vendor IP protection (code integrity and code confidentiality) is achieved.

Referring to FIG. 3, an exemplary configuration of the edge platform 110 for data and code protection is depicted. The edge platform 110 comprises a first application 220a, a second application 220b, an operating system 302, a hypervisor 304, and hardware 306. The second application 220b is published by a vendor 308 and the vendor 308 makes the second application 220b available in a marketplace. The edge platform 110 is accessible to an administrator 310. The administrator 310 has root access and high privileges.

The second application 220b is configured to process sensitive and confidential data. The protection of sensitive and confidential data is to be ensured along with the protection of vendor IP (code of the second application 220b). The hardware 306 forms part of a trusted computing base (a trusted environment) while the other components, i.e., operating system 302 and hypervisor 304 are not part of the trusted computing base.

As the hardware 306 is trusted, the second application 220b trusts the hardware 306 with sensitive data. The hardware 306 may include secure enclaves, i.e., isolated runtime environments or isolated memory regions for data processing. In order to trust the hardware 306, the attestation service entity 130 performs remote attestation and validates the trusted state, thereby minimizing the risk of communication with compromised entities. The attestation service entity 130 forms a part of the trusted computing base. The trusted computing base is reduced to an absolute minimum, completely removing high-privileged local components from the trusted computing base.

The administrator 310, even though having root access, cannot access the isolated runtime environments in the hardware 306. Moreover, the data processed in the isolated runtime environments in the hardware 306 remains secured even in a scenario where other components, such as the operating system 302, are compromised. As a result, the protection of sensitive data as well as the protection of application code is ensured.

Reference is now made to FIG. 4 which illustrates an exemplary use case for secure execution of application on the edge platform 110 to enable data and code protection. A secure metering component is developed which cannot be modified/tampered with unnoticed. Data from applications and sensors is securely collected and stored. Trustworthy edge application usage metering can thus be provided. In an example, traditional licensing can be replaced with billing based on metering data.

As seen in FIG. 4, data from loT devices 240 and data from sensors 230 is provided to the edge platform. The edge platform 110 comprises a first application 220a and a second application 220b. The data is provided to both the first application 220a and the second application 220b. Each of the first application 220a and the second application 220b have corresponding isolated runtime environments 210a, 210b. The applications 220a, 220b running on the edge platform 110 and the corresponding isolated runtime environments 210a, 210b mutually attest each other using a strong root of trust by means of corresponding encryption keys 402a, 402b. The corresponding isolated runtime environments 21 0a, 210b also include keys for confirming the confidentiality and integrity of the data.

Referring to FIG. 5A, an exemplary process flow depicting a method 500 for enabling secure execution of one or more applications 220 on the edge platform 110 by the system 120 is depicted. The method 500 is performed by the system 120. In an embodiment, the method 500 is performed by one or more processors 250 of the system 120.

The method 500 starts at step 502 where the system 120 receives an indicator indicative of a trust state of the one or more applications 220. The one or more applications 220 are configured to run within an isolated runtime environment 210 at the edge platform 110.

At step 504, the system 120 sends the received indicator to the attestation service entity 130 to verify the indicator indicating the trust state of the one or more applications 220.

In an embodiment, the attestation service entity 130 is provided as a remote service for the edge platform 110.

In an embodiment, the one or more applications include a first application and at least a second application. The first application and the at least second application are associated with corresponding isolated runtime environments 210 within the edge platform 110.

At step 506, the system 120 receives a verification response from the attestation service entity 130, the verification response indicating that the one or more applications 220 are running in the trusted state within a trusted environment.

At step 508, upon receiving the verification response from the attestation service entity 130, the system 120 provides the one or more applications 220 with data for execution of the one or more applications 220, thereby enabling data integrity and confidentiality within the edge platform.

In an embodiment, providing the one or more applications 220 with data for execution of the one or more applications comprises receiving the data for execution of the one or more applications 220 from one or more devices associated with the edge platform. Further, the method comprises encrypting the data using one or more encryption keys. Further, the method comprises providing the data to the one or more applications 220 running within the isolated runtime environment for execution of the one or more applications 220. The one or more applications 220 running within the isolated runtime environment include one or more decryption keys corresponding to the one or more encryption keys.

In an embodiment, the data from one or more devices include one or more of data from the plurality of sensors 230 and data from the plurality of loT devices 240.

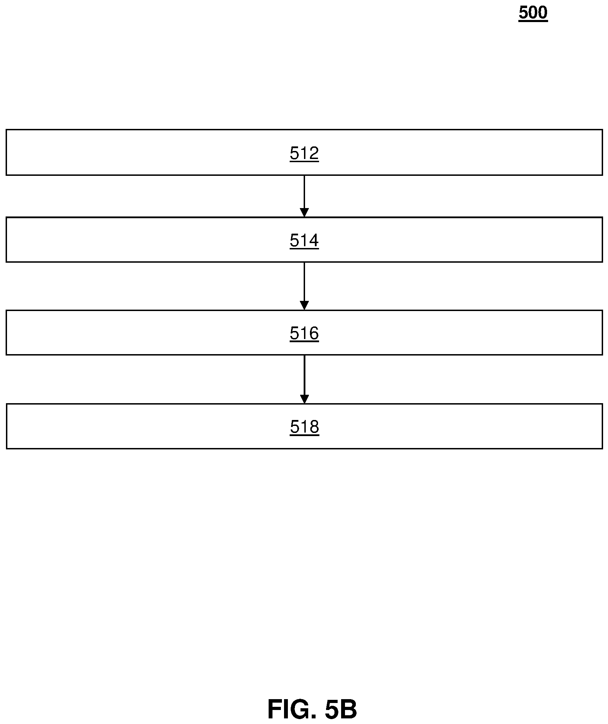

In an embodiment, application code integrity, and confidentiality within the edge platform are enabled. FIG. 5B depicts an exemplary process flow depicting substeps of the method 500 for enabling the secure execution of one or more applications 220 and enabling application code integrity and confidentiality.

At step 512, the method comprises receiving, from a loader application, an indicator indicating trust state of the loader application. The loader application is associated with encrypted versions of the one or more applications.

At step 514, the method comprises sending the received indicator to the attestation service entity for verifying the indicator indicating the trust state of the loader application.

At step 516, the method comprises receiving a verification response from the attestation service entity, the verification response indicating that the loader application is running in the trusted state within a trusted environment.

At step 518, the method comprises, upon receiving the verification response from the attestation service entity, decrypting the encrypted versions of the one or more applications for loading the one or more applications within the isolated runtime environment, thereby enabling application code integrity and confidentiality within the edge platform.

While the above steps shown in FIGS. 5A-5B are described in a particular sequence, the steps may occur in variations to the sequence in accordance with various embodiments of the present invention. Further, the details related to various steps of FIGS. 5A-5B, which are already covered in the description related to FIGS. 1-3 are not discussed again in detail here for the sake of brevity.

As described above, the present invention provides for various technical advancements based on the key features discussed above. The disclosed method enables data integrity, data confidentiality, code integrity, and code confidentiality within the edge platform. A secure and trustworthy execution of applications is thus achieved at the edge platform. Further, customer IP protection as well as vendor IP protection is achieved.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

### LIST OF REFERENCE NUMERALS

| | |
|---|---|
| Environment | 100 |
| Edge Platform | 110 |
| System | 120 |
| Attestation Service Entity | 130 |
| Network | 140 |
| Runtime Environment | 210, 210a, 210b |
| One or More Applications | 220, 220a, 220b |
| Plurality of Sensors | 230 |
| Plurality of loT devices | 240 |
| Processors | 250 |
| Memory | 260 |
| Database | 262 |
| Operating System | 302 |
| Hypervisor | 304 |
| Hardware | 306 |
| Vendor | 308 |
| Administrator | 310 |
| Encryption Keys | 402a, 402b |
| Method | 500 |

## Claims

1. A method (500) of enabling secure execution of one or more applications on an edge platform, the method (500) comprising:
receiving (502), from the one or more applications (220), an indicator indicative of a trust state of the one or more applications (220), wherein the one or more applications (220) are configured to run within an isolated runtime environment (210) at the edge platform (110);
sending (504) the received indicator to an attestation service entity (130) for verifying the indicator indicating the trust state of the one or more applications (220);
receiving (506) a verification response from the attestation service entity (130), the verification response indicating that the one or more applications (220) are running in the trusted state within a trusted environment; and
upon receiving the verification response from the attestation service entity (130), providing (508) the one or more applications (220) with data for execution of the one or more applications, thereby enabling data integrity and confidentiality within the edge platform (110).

2. The method (500) according to claim 1, wherein providing the one or more applications (220) with data for execution of the one or more applications comprises:
receiving the data for execution of the one or more applications (220) from one or more devices associated with the edge platform (110);
encrypting the data using one or more encryption keys; and
providing the data to the one or more applications (220) running within the isolated runtime environment (210) for execution of the one or more applications, wherein the one or more applications (220) running within the isolated runtime environment (210) include one or more decryption keys corresponding to the one or more encryption keys.

3. The method (500) according to claim 2, wherein the data from one or more devices include one or more of data from a plurality of sensors (230) associated with the edge platform (110) and data from a plurality of Internet of Things (IoT) devices (240) associated with the edge platform (110).

4. The method (500) according to claim 1, further comprising:
receiving (512), from a loader application, an indicator indicating trust state of the loader application, wherein the loader application is associated with encrypted versions of the one or more applications (220);
sending (514) the received indicator to the attestation service entity (130) for verifying the indicator indicating the trust state of the loader application;
receiving (516) a verification response from the attestation service entity (130), the verification response indicating that the loader application is running in the trusted state within a trusted environment; and
upon receiving the verification response from the attestation service entity (130), decrypting (518) the encrypted versions of the one or more applications (220) for loading the one or more applications within the isolated runtime environment (210), thereby enabling application code integrity and confidentiality within the edge platform (110).

5. The method (500) according to claim 1, wherein the attestation service entity (130) is provided as a remote service for the edge platform (110).

6. The method (500) according to claim 1, wherein the one or more applications (220) include a first application (220a) and at least a second application (220b), wherein the first application (220a) and the at least second application (220b) are associated with corresponding isolated runtime environments (210a, 210b) within the edge platform (110).

7. A system (120) to enable secure execution of one or more applications on an edge platform, the system (120) comprising:
a memory (260); and
one or more processors (250) communicatively coupled to the memory (260), wherein the memory (260) comprises programmable instructions which, when executed by the one or more processors (250), cause the one or more processors (250) to:
receive, from the one or more applications (220), an indicator indicative of a trust state of the one or more applications (220), wherein the one or more applications are configured to run within an isolated runtime environment at the edge platform (110);
send the received indicator to an attestation service entity (130) for verifying the indicator indicating the trust state of the one or more applications (220);
receive a verification response from the attestation service entity (130), the verification response indicating that the one or more applications (220) are running in the trusted state within a trusted environment; and
provide the one or more applications (220) with data for execution of the one or more applications (220) upon receiving the verification response from the attestation service entity (130), thereby enabling data integrity and confidentiality within the edge platform (110).

8. The system (120) according to claim 7, wherein to provide the one or more applications with data for execution of the one or more applications, the one or more processors (250) are configured to:
receive the data for execution of the one or more applications (220) from one or more devices associated with the edge platform (110);
encrypt the data using one or more encryption keys; and
provide the data to the one or more applications (220) running within the isolated runtime environment (210) for execution of the one or more applications, wherein the one or more applications (220) running within the isolated runtime environment (210) include one or more decryption keys corresponding to the one or more encryption keys.

9. The system (120) according to claim 8, wherein the data from one or more devices include one or more of data from a plurality of sensors (230) associated with the edge platform (110) and data from a plurality of Internet of Things (IoT) devices (240) associated with the edge platform (110).

10. The system (120) according to claim 7, wherein the one or more processors (250) are further configured to:
receive, from a loader application, an indicator indicating trust state of the loader application, wherein the loader application is associated with encrypted versions of the one or more applications (220);
send the received indicator to the attestation service entity (130) for verifying the indicator indicating the trust state of the loader application;
receive a verification response from the attestation service entity (130), the verification response indicating that the loader application is running in the trusted state within a trusted environment; and
decrypt the encrypted versions of the one or more applications (220) for loading the one or more applications (220) within the isolated runtime environment (210) upon receiving the verification response from the attestation service entity, thereby enabling application code integrity and confidentiality within the edge platform (110).

11. The system (120) according to claim 7, wherein the attestation service entity (130) is provided as a remote service for the edge platform (110).

12. The system (120) according to claim 7, wherein the one or more applications (220) include a first application (220a) and at least a second application (220b), wherein the first application (220a) and the at least second application (220b) are associated with corresponding isolated runtime environments (210a, 210b) within the edge platform (110).

13. An environment (100) comprising:
a system (120) as claimed in claim 7;
an edge platform (110) communicatively coupled to the system (120); and
an attestation service entity (130) communicatively coupled to the system (120) via a network (140), wherein the system (120) is configured to perform a method (500) according to any of the claims 1 to 6.

14. A computer-program product, having machine-readable instructions stored therein, which when executed by one or more processors (250), cause the one or more processors (250) to perform a method (500) according to any of the claims 1 to 6.

15. A non-transitory computer readable medium encoded with executable instructions which, when executed by one or more processors (250), cause the one or more processors (250) to perform a method (500) according to any one of the claims 1 to 6.
